(19) Europäisches Patentamt
European Patent Office
Office européen des brevets

(11) **EP 4 261 942 A1**

(12) **EUROPEAN PATENT APPLICATION**
published in accordance with Art. 153(4) EPC

(43) Date of publication:
**18.10.2023 Bulletin 2023/42**

(21) Application number: **22807759.0**

(22) Date of filing: **10.05.2022**

(51) International Patent Classification (IPC):
*H01M 4/36* (2006.01)     *H01M 4/62* (2006.01)
*H01M 10/42* (2006.01)     *H01M 4/525* (2010.01)
*C01G 53/00* (2006.01)     *H01M 10/052* (2010.01)

(52) Cooperative Patent Classification (CPC):
**C01G 53/00; H01M 4/36; H01M 4/525; H01M 4/62;
H01M 10/052; H01M 10/42;** Y02E 60/10

(86) International application number:
**PCT/KR2022/006606**

(87) International publication number:
**WO 2022/240111 (17.11.2022 Gazette 2022/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.05.2021   KR 20210060079
09.05.2022   KR 20220056352**

(71) Applicant: **LG Energy Solution, Ltd.
Seoul 07335 (KR)**

(72) Inventors:
• YOO, Tae Gu
  Daejeon 34122 (KR)
• LEE, Boram
  Daejeon 34122 (KR)
• JUNG, Hae Jung
  Daejeon 34122 (KR)
• JUNG, Wang Mo
  Daejeon 34122 (KR)
• PARK, Byungchun
  Daejeon 34122 (KR)

(74) Representative: **Hoffmann Eitle
Patent- und Rechtsanwälte PartmbB
Arabellastraße 30
81925 München (DE)**

(54) **ADDITIVE FOR POSITIVE ELECTRODE OF LITHIUM SECONDARY BATTERY, METHOD FOR MANUFACTURING SAME, AND LITHIUM SECONDARY BATTERY COMPRISING SAME**

(57)    Provided is an additive for a positive electrode of a lithium secondary battery, the additive comprising a lithium transition metal oxide, $Li_3PO_4$, and $Li_5AlO_4$. The lithium transition metal oxide is doped with aluminum. The additive comprising $Li_3PO_4$ and $Li_5AlO_4$ along with the lithium transition metal oxide has the function of improving battery stability when applied to a positive electrode of a lithium secondary battery. Specifically, typical lithium transition metal oxides, when applied to a positive electrode of a lithium secondary battery, have the issue of reducing stability, such as by causing side reactions with an electrolyte solution and thereby generating gas in the battery. However, the $Li_3PO_4$ and $Li_5AlO_4$ are uniformly mixed with the lithium transition metal oxide or form a portion of a coating layer, and the lithium transition metal oxide is doped with a portion of the aluminum, and thus side reactions between the lithium transition metal oxide and the electrolyte solution are suppressed.

EP 4 261 942 A1

**Description**

[Technical Field]

This application claims the benefits of priorities based on Korean Patent Application No. 2021-0060079 filed on May 10, 2021 and Korean Patent Application No. 2022-0056352 filed on May 09, 2022.
The present disclosure relates to an additive for a positive electrode of a lithium secondary battery, a preparation method thereof, and a positive electrode of a lithium secondary battery comprising the same.

[Background Art]

As technology development and demand for mobile devices are increasing, demand for secondary batteries as an energy source is rapidly increasing. Among these secondary batteries, a lithium secondary battery with high energy density and voltage, long cycle lifetime, and low self-discharging rate has been commercialized and widely used.
Lithium transition metal oxides are used as a positive electrode active material for a lithium secondary battery, and among them, lithium cobalt oxide of $LiCoO_2$ with high operating voltage and excellent capacity is mainly used. However, since $LiCoO_2$ has very poor thermal properties due to the destabilization of the crystal structure in accordance with lithium removal and is expensive, there is a limit to mass use as a power source in fields such as electric vehicles. As a material to replace $LiCoO_2$, lithium manganese oxides ($LiMnO_2$ or $LiMn_2O_4$, etc.), lithium iron phosphate compounds ($LiFePO_4$, etc.), lithium nickel oxides ($LiNiO_2$, etc.), or the like has been developed. Among them, research and development of lithium nickel oxides, which have a high reversible capacity of about 200 mAh/g, and are easy to realize large-capacity batteries, have been actively conducted.
In addition, in order to realize a high-capacity lithium secondary battery for a negative electrode active material, the demand for the use of a Si-based negative electrode active material has increased, but in the case of the Si-based negative electrode active material, the irreversible capacity is large, so it is necessary to balance the irreversible capacity even at the positive electrode for efficient operation of the battery. For this reason, studies on additives for positive electrodes with large irreversible capacity were also conducted, and in this process, various additives such as $Li_2NiO_2$, $Li_2CuO_4$, and $Li_6CoO_4$ were used as additives for a positive electrode with a large irreversible capacity.
In the case of $Li_2NiO_2$, it is synthesized by a solid-phase method of $Li_2O$ and NiO, but the synthesis rate is low, so $Li_2O$ and NiO are basically left as unreacted substances. In the case of $Li_2O$ and NiO, capacity expression is difficult, and in the case of $Li_2O$, it can be converted into LiOH and $Li_2CO_3$, and thus there are problems that a gelation phenomenon occurs during the manufacturing process of the electrode, and gas is generated during charging/discharging and high-temperature storage.
In order to solve these problems, in the relevant technical field, there is still research on additives for positive electrodes to improve the performance of the lithium secondary battery.

[Prior Art Document]

[Patent Document]

(Patent Document 1) Korean Patent Publication No. 10-2016-002187

[Disclosure]

[Technical Problem]

The present disclosure provides an additive for a positive electrode of a lithium secondary battery capable of improving the stability of the battery by including $Li_3PO_4$ and $Li_5AlO_4$ together with lithium transition metal oxide, in which a part of the transition metal is doped with aluminum, as an additive for the positive electrode of a lithium secondary battery, when applied to the lithium secondary battery, and a preparation method thereof, and a positive electrode of a lithium secondary battery comprising the same.

[Technical Solution]

According to a first aspect of the present invention,
the present invention provides an additive for a positive electrode of a lithium secondary battery, the additive comprising lithium transition metal oxide, $Li_3PO_4$ and $Li_5AlO_4$ wherein the lithium transition metal oxide is doped with aluminum.
In one embodiment of the present invention, the lithium transition metal oxide is represented by Formula 1 below:

[Formula 1]

$$Li_2Ni_{1-x}Al_xO_2$$

wherein x is 0.001 to 0.005.

In one embodiment of the present invention, the lithium transition metal oxide is contained in an amount of 75 to 90% by weight based on the total weight of the additive.

In one embodiment of the present invention, the $Li_3PO_4$ is contained in an amount of 1 to 10% by weight based on the total weight of the additive.

In one embodiment of the present invention, $Li_5AlO_4$ is contained in an amount of 0.5 to 5% by weight based on the total weight of the additive.

In one embodiment of the present invention, a portion of the $Li_3PO_4$ exists in a state of being coated on the lithium transition metal oxide.

In one embodiment of the present invention, the additive further comprises NiO.

In one embodiment of the present invention, the NiO is contained in an amount of 5 to 15% by weight based on the total weight of the additive.

According to a second aspect of the present invention,
the present invention provides a method for preparing the additive for the positive electrode of the lithium secondary battery described above, comprising the steps of (1) mixing a transition metal source material, a lithium source material, a phosphorus source material, and an aluminum source material to prepare a mixture; and (2) heat-treating the mixture to prepare the additive.

In one embodiment of the present invention, in step (1) above, the transition metal source material is NiO, the lithium source material is $Li_2O$, LiOH or $Li_2CO_3$, the phosphorus source material is $(NH_4)_2HPO_4$, and the aluminum source material is $Al(OH)_3$.

In one embodiment of the present invention, the heat-treating is performed at 300 to 700°C for 10 to 32 hours.

According to a third aspect of the invention,
the present invention provides a positive electrode of a lithium secondary battery comprising the additive described above and a positive electrode active material, wherein the additive is contained in an amount of 10 to 40 parts by weight based on 100 parts by weight of the positive electrode active material.

[Advantageous Effects]

The additive for a positive electrode of a lithium secondary battery according to the present disclosure includes lithium transition metal oxide, $Li_3PO_4$ and $Li_5AlO_4$, and the lithium transition metal oxide is in a state doped with aluminum.

In addition, the additive for the positive electrode of the lithium secondary battery may comprise phosphorus, and the phosphorus may be simply mixed or comprised in a form coated on the lithium transition metal oxide. By comprising the phosphorus and aluminum together, aluminum may be better doped, and thus, the amount of gas generated by the phosphorus may be reduced, and the amount of nickel precipitation may be reduced due to the aluminum.

The additive comprising $Li_3PO_4$ and $Li_5AlO_4$ together with the lithium transition metal oxide has a function of improving battery stability when applied to a positive electrode of a lithium secondary battery. Specifically, when a general lithium transition metal oxide is applied to the positive electrode of a lithium secondary battery, it may cause a side reaction with the electrolyte solution to generate gas in the battery, which may cause a problem with poor stability. However, $Li_3PO_4$ and $Li_5AlO_4$ are uniformly mixed with the lithium transition metal oxide or partially form a coating layer, and some aluminum is doped into the lithium transition metal oxide to inhibit the lithium transition metal oxide from causing side reactions with the electrolyte solution.

[Detailed Description]

Hereinafter, the present invention will be described in more detail to help the understanding of the present invention.

The terms and words used in the present specification and claims should not be construed as limited to ordinary or dictionary terms, and should be construed in a sense and concept consistent with the technical idea of the present invention, based on the principle that the inventor can properly define the concept of a term to describe his invention in the best way possible.

The embodiments provided according to the present invention can all be achieved by the following description. It is to be understood that the following description describes preferred embodiments of the present invention, and the present invention is not necessarily limited thereto.

With respect to the physical properties described herein, if measurement conditions and methods are not specifically described, the physical properties are measured according to measurement conditions and methods generally used by those skilled in the art.

**Additive and positive electrode active material**

The present disclosure provides an additive for a positive electrode of a lithium secondary battery comprising a lithium transition metal oxide, $Li_3PO_4$ and $Li_5AlO_4$.

The lithium transition metal oxide is mixed with the positive electrode active material, and thus functions to supplement the performance of the positive electrode active material, such as the electrode capacity. In the lithium transition metal oxide, the transition metal is selected from Co, Ni, Cu, Mn, Fe, and combinations thereof, and specifically, the lithium transition metal oxide may be selected from $LiCoO_2$, $LiNiO_2$, $LiMnO_2$, $LiMn_2O_4$, $Li(Ni_aCo_bMn_c)O_2$ ($0<a<1$, $0<b<1$, $0<c<1$, $a+b+c=1$), $LiNi_{1-y}Co_yO_2$($O<y<1$), $LiCo_{1-y}Mn_yO_2$, $LiNi_{1-y}Mn_yO_2$($O<y<1$), $Li(Ni_aCo_bMn_c)O_4$ ($0<a<2$, $0<b<2$, $0<c<2$, $a+b+c=2$), $LiMn_{2-z}Ni_zO_4$($0<z<2$), $LiMn_{2-z}Co_zO_4$($0<z<2$), and combinations thereof, which are generally used as a positive electrode active material, but an irreversible lithium transition metal oxide such as $Li_2NiO_2$, $Li_2CuO_4$, $Li_6CoO_4$, etc. containing an excess of lithium may be used to be used together with a Si-based negative electrode active material having a large irreversible capacity. According to one embodiment of the present invention, the lithium transition metal oxide is $Li_2NiO_2$. In the case of $Li_2NiO_2$, it is synthesized by a solid-phase method of $Li_2O$ and NiO, but the synthesis rate is low, so that $Li_2O$ and NiO are basically left as unreacted substances. In the case of $Li_2O$ and NiO, capacity expression is difficult, and in the case of $Li_2O$, it may be converted into LiOH and $Li_2CO_3$, and thus there is a problem that a gelation phenomenon occurs during the electrode manufacturing process, and gas is generated during charging/discharging and high temperature storage. According to one embodiment of the present invention, the lithium transition metal oxide has a form doped with aluminum. This is because, in the manufacture of the additive, it is affected by the aluminum source material and the phosphorus source material added together. The lithium transition metal oxide doped with aluminum may be expressed as Formula 1 below.

[Formula 1]

$$Li_2Ni_{1-x}Al_xO_2$$

wherein x is 0.001 to 0.005, specifically 0.0015 to 0.004, more specifically 0.002 to 0.003.

Since $Li_3PO_4$ and $Li_5AlO_4$ comprised together with lithium transition metal oxide as additives for the positive electrode of the lithium secondary battery in the present disclosure are coated on the lithium transition metal oxide and have a particularly excellent effect in suppressing side reactions with the electrolyte solution, the better improvement in the performance of the battery according to the addition of $Li_3PO_4$ and $Li_5AlO_4$ can be expected, when used with $Li_2NiO_2$ among lithium transition metal oxides.

According to one embodiment of the present invention, the lithium transition metal oxide is contained in an amount of 75 to 90% by weight, preferably 77 to 87% by weight, and more preferably 80 to 85% by weight based on the total weight of the additives. The lithium transition metal oxide is an additive that functions to complement the performance of the positive electrode active material, such as the electrode capacity, and in order to express the performance of the lithium secondary battery, although a certain level or more of the content thereof is required, a problem of stability may occur, so that the ratio of $Li_3PO_4$ and $Li_5AlO_4$ with the additive material must be appropriately controlled. If the lithium transition metal oxide is contained in an amount of less than 75% by weight based on the total weight of the additive, the performance of a basic lithium secondary battery may be deteriorated. If the lithium transition metal oxide is contained in an amount exceeding 90% by weight based on the total weight of the additive, there may be problems with the stability of the overall positive electrode.

The additive according to the present disclosure comprises $Li_3PO_4$ by adding a phosphorus source material and reacting it with $Li_2O$ or the like during the manufacturing process. The phosphorus source material will be described in detail in 'Method for preparing additive' below. The $Li_3PO_4$ improves the stability of the lithium transition metal oxide, and in particular, it may suppress the generation of gas in the battery by reacting the lithium transition metal oxide with the electrolyte solution. In addition, if a phosphorus source material of a certain level or more is comprised in the manufacturing process of the additive, it helps some aluminum to be doped and localized to the lithium transition metal oxide. According to one embodiment of the present invention, the $Li_3PO_4$ is contained in an amount of 1 to 10% by weight, preferably 2 to 8% by weight, and more preferably 3 to 6% by weight based on the total weight of the additive. If the $Li_3PO_4$ is contained in an amount of less than 1% by weight based on the total weight of the additive, the effect of improving the stability of the lithium secondary battery may be insignificant. If $Li_3PO_4$ is contained in an amount exceeding 10% by weight based on the total weight of the additive, the content of other components is relatively reduced, which is not preferable in terms of performance of the lithium secondary battery.

The additive according to the present disclosure includes $Li_5AlO_4$ by adding an aluminum source material and

reacting it with $Li_2O$ or the like during the preparation process. The aluminum source material is described in detail in the 'Preparation method of additive' below. A portion of the aluminum supplied through the aluminum source material may be doped into the lithium transition metal. When aluminum is doped, the lithium transition metal oxide may be expressed as Formula 1 above. If aluminum is doped on the surface related to the h index, it is possible to reduce Ni leaching while generating peak splitting. According to one embodiment of the present invention, the $Li_5AlO_4$ is contained in an amount of 0.5 to 5% by weight, preferably 1 to 4% by weight, and more preferably 1.5 to 3% by weight based on the total weight of the additive. If the $Li_5AlO_4$ is contained in an amount of less than 0.5% by weight based on the total weight of the additive, the effect of improving the stability of the lithium secondary battery may be insignificant. $Li_5AlO_4$ is contained in an amount exceeding 5% by weight based on the total weight of the additive, the content of other components is relatively reduced, which is not preferable in terms of performance of the lithium secondary battery.

Even if the additive materials of $Li_3PO_4$ and $Li_5AlO_4$ contained together with the lithium transition metal oxide contain the same or a large amount of one or two types of materials, they do not have an excellent effect on the stability of the lithium secondary battery compared to using three types of materials at the same time. The two types of additives have individual functions, and when used together, they show a synergistic effect on the stability of the lithium secondary battery.

The additive according to the present disclosure may further include NiO together with lithium transition metal oxide, $Li_3PO_4$ and $Li_5AlO_4$. The NiO is one of the transition metal source materials added during the preparation process of the additive, which may be present in the additive in an unreacted state as a stable compound with low reactivity. Depending on the type of transition metal of the lithium transition metal oxide used in the additive, Ni in NiO may be replaced with materials such as Co, Cu, Mn, and Fe. According to one embodiment of the present invention, the NiO is contained in an amount of 5 to 15% by weight, preferably 7 to 13% by weight, and more preferably 8 to 11% by weight based on the total weight of the additive.

The positive electrode active material functions as a practical positive electrode active material that exchanges electrons with the positive electrode of a lithium secondary battery, and a material generally used in the art may be used. Specifically, the positive electrode active material may be selected from $LiCoO_2$, $LiNiO_3$, $LiMnO_2$, $LiMn_2O_4$, $Li(Ni_aCo_bMn_c)O_2$ ($0<a<1$, $0<b<1$, $0<c<1$, $a+b+c=1$), $LiNi_{1-y}Co_yO_2$($0<y<1$), $LiCo_{1-y}Mn_yO_2$, $LiNi_{1-y}Mn_yO_2$($0<y<1$), $Li(Ni_aCo_bMn_c)O_4$ ($0<a<2$, $0<b<2$, $0<c<2$, $a+b+c=2$), $LiMn_{2-z}Ni_zO_4$($0<z<2$), $LiMn_{2-z}Co_zO_4$($0<z<2$) and combinations thereof. Since the additive plays a role of supplementing the electrode capacity of the positive electrode active material, the content can be appropriately adjusted in consideration of the relationship with the positive electrode active material. According to one embodiment of the present invention, the additive is contained in an amount of 10 to 40 parts by weight, preferably 10 to 30 parts by weight, and more preferably 10 to 20 parts by weight based on 100 parts by weight of the positive electrode active material. When the additive is added within the above range, the effect of improving the performance of the positive electrode active material is excellent.

## Preparation method of additive

The present disclosure provides a method for preparing the additive for the positive electrode of the lithium secondary battery described above. The preparation method comprises the steps of (1) preparing a mixture by mixing a transition metal source material, a lithium source material, a phosphorus source material, and an aluminum source material; and (2) heat-treating the mixture.

In step (1), the transition metal source material is a material for supplying a transition metal to lithium transition metal oxide or the like contained in the final positive electrode active material, and may generally be a transition metal oxide. According to one embodiment of the present invention, the transition metal source material is NiO. The lithium source material is a material that supplies lithium to lithium transition metal oxide, $Li_3PO_4$ and $Li_5AlO_4$ $Li_3BO_3$ contained in the final additive, and may be generally lithium oxide. According to one embodiment of the present invention, the lithium source material is $Li_2O$, LiOH or $Li_2CO_3$. The phosphorus source material is a material that supplies phosphorus to $Li_3PO_4$ or the like contained in the final additive, and may generally be ammonium phosphate. According to one embodiment of the present invention, the phosphorus source material is $(NH_4)_2HPO_4$. The aluminum source material is a material that supplies aluminum to $Li_5AlO_4$ or the like contained in the final additive, and may generally be aluminum hydroxide. According to one embodiment of the present invention, the aluminum source material is $Al(OH)_3$.

In step (1), the transition metal source material, the lithium source material, the phosphorus source material, and the aluminum source material may be added in appropriate amounts according to the content of the above-described components of the additive. According to one embodiment of the present invention, when mixing the source materials, the content of NiO and $Li_2O$ may be adjusted so that the mole of $Li_2O$/mol of NiO is 1.5 to 2.5, specifically 1.7 to 2.3, and more specifically 1.9 to 2.1. According to one embodiment of the present invention, the content of $Al(OH)_3$ can be adjusted to be 0.005 to 0.05 mol%, specifically 0.01 to 0.04 mol%, and more specifically 0.01 to 0.03 mol%, based on the mole of NiO, and the content of $(NH_4)_2HPO_4$ may be adjusted so that P is 1 to 7% by weight, specifically 1.5 to 6% by weight, and more specifically 2 to 5.5% by weight, based on the total weight of NiO and $Li_2O$.

An additive is prepared by heat-treating the mixture prepared in step (1). The heat-treatment is sufficient to calcinate the mixture so that the constituents of the above-mentioned additive can be obtained. According to one embodiment of the present invention, the mixture in step (2) is heat-treated at 300 to 700 °C, preferably 300 to 600 °C, and more preferably 300 to 500 °C, for 10 to 32 hours, preferably 10 to 26 hours, and more preferably 10 to 20 hours.

Lithium secondary battery

The present disclosure provides a lithium secondary battery comprising a positive electrode, a negative electrode, a separator and an electrolyte. In the lithium secondary battery, the positive electrode and the negative electrode are positioned to face each other, and the separator is interposed between the positive electrode and the negative electrode. The electrode assembly of the positive electrode, the negative electrode and the separator is housed in a battery container, and the battery container is filled with electrolyte.

The positive electrode comprises a positive electrode current collector and a positive electrode active material layer which is formed on the positive electrode current collector and comprises the above-described additive and the positive electrode active material.

In the positive electrode, the positive electrode current collector is not particularly limited as long as it has conductivity without causing a chemical change in the battery, and for example, stainless steel, aluminum, nickel, titanium, sintered carbon, or aluminum or stainless steel surface-treated with carbon, nickel, titanium, silver or the like may be used. In addition, the positive electrode current collector may typically have a thickness of 3 to 500 $\mu$m, and can enhance the bonding force with positive electrode active material by having fine irregularities on the surface of the positive electrode current collector. For example, various forms such as film, sheet, foil, net, porous body, foam, or nonwoven fabric may be used.

The positive electrode active material layer may comprise an electrically conductive material and a binder together with the above-described additive and the positive electrode active material.

The electrically conductive material is used to impart electrical conductivity to the electrode, and may be used without any particular limitation as long as it has electronic conductivity without causing chemical change in the battery to be constructed. A specific example of the electrically conductive material may be graphite such as natural graphite or artificial graphite; carbonaceous materials such as carbon black, acetylene black, Ketjen black, channel black, furnace black, lamp black, thermal black, carbon fiber, etc.; metal powder or metal fiber such as copper, nickel, aluminum, silver, etc.; electrically conductive whiskers such as zinc oxide and potassium titanate; electrically conductive metal oxides such as titanium oxide; or electrically conductive polymers such as polyphenylene derivatives, and one of them may be used or two or more mixtures may be used. The electrically conductive material may generally be contained in an amount of 1 to 30 % by weight based on the total weight of the positive electrode active material layer.

The binder serves to improve the adhesion between the positive electrode active material particles and the adhesive force between the positive electrode active material and the positive electrode current collector. Specific examples may be poly(vinylidene fluoride) (PVDF), poly(vinylidene fluoride-co-hexafluoropropylene)(PVDF-co-HFP), polyvinyl alcohol, polyacrylonitrile, carboxymethylcellulose (CMC), starch, hydroxypropyl cellulose, regenerated cellulose, polyvinyl pyrrolidone, tetrafluoroethylene, polyethylene, polypropylene, ethylenepropylene-diene monomer (EPDM), sulfonated-EPDM, styrenebutadiene rubber (SBR), fluorine rubber, or various copolymers thereof, and any one or a mixture of two or more thereof. The binder may be contained in an amount of 1 to 30% by weight based on the total weight of the positive electrode active material layer.

The additive and the positive electrode active material may be contained in an amount of 60 to 95% by weight based on the total weight of the positive electrode active material layer.

The positive electrode may be manufactured according to a conventional positive electrode manufacturing method except for using the above-described additive and the positive electrode active material. Specifically, the positive electrode can be manufactured by applying a composition for forming a positive electrode active material layer, which comprises the above-described additive and a positive electrode active material, and optionally, a binder and an electrically conductive material, on the positive electrode current collector, and then, drying and rolling it. At this time, the type and content of the additive, the positive electrode active material, the binder, and the electrically conductive material are the same as described above.

The solvent may be a solvent generally used in the art, and may comprise dimethyl sulfoxide (DMSO), isopropyl alcohol, N-methylpyrrolidone (NMP), acetone or water, and one of these or a mixture of two or more thereof may be used. The amount of the solvent used is sufficient as long as it has a viscosity capable of exhibiting excellent thickness and uniformity, when dissolving or dispersing the additive, the positive electrode active material, the electrically conductive material and the binder, and then, applying for manufacturing the positive electrode, in consideration of the application thickness of the slurry and the production yield.

Alternatively, the positive electrode may be prepared by casting the composition for forming the positive electrode active material layer on a separate support, and then laminating a film obtained by peeling it from the support on a positive electrode current collector.

The negative electrode comprises a negative electrode current collector and a negative electrode active material layer disposed on the negative electrode current collector.

The negative electrode active material layer optionally comprises a binder and an electrically conductive material together with the negative electrode active material.

As the negative electrode active material, a compound capable of reversibly intercalating and de-intercalating lithium may be used. A specific example of the negative electrode active material may be carbonaceous materials such as artificial graphite, natural graphite, graphitized carbon fiber, and amorphous carbon; metallic compounds capable of alloying with lithium, such as Si, Al, Sn, Pb, Zn, Bi, In, Mg, Ga, Cd, Si alloy, Sn alloy, or Al alloy; metal oxides capable of doping and de-doping lithium, such as $SiO_\beta(0<\beta<2)$, $SnO_2$, vanadium oxide, and lithium vanadium oxide; or a composite including the above-mentioned metallic compound and carbonaceous material, such as a Si-C composite or a Sn-C composite, and any one or a mixture of two or more thereof may be used. In addition, a metal lithium thin film may be used as the negative electrode active material. In addition, as the carbon material, both low crystalline carbon and high crystalline carbon may be used. As low crystalline carbon, soft carbon and hard carbon are representative, and as high crystalline carbon, amorphous, plate-like, flaky, spherical or fibrous natural or artificial graphite, Kish graphite, pyrolytic carbon, mesophase pitch-based carbon fiber, meso-carbon microbeads, mesophase pitches and high-temperature calcined carbon such as petroleum or coal tar pitch derived cokes are representative.

The binder, the electrically conductive material, and the negative electrode current collector may be selected with reference to the configuration of the above-described positive electrode, but are not necessarily limited thereto. In addition, the method of forming the negative electrode active material layer on the negative electrode current collector is based on a known coating method as in the positive electrode, and is not particularly limited.

In the lithium secondary battery, the separator separates the negative electrode and the positive electrode and provides a passage for lithium ions to move. The separator can be used without any particular limitation as long as it is usually used as a separator in a lithium secondary battery. As the separator, it is particularly preferable to have low resistance to ion movement of the electrolyte and excellent electrolyte impregnation ability. Specifically, a porous polymer film, for example, a porous polymer film made of a polyolefin-based polymer such as ethylene homopolymer, propylene homopolymer, ethylene/butene copolymer, ethylene/hexene copolymer, ethylene/methacrylate copolymer, etc. or a laminated structure of two or more layers thereof may be used. In addition, a conventional porous nonwoven fabric, for example, a nonwoven fabric made of high melting point glass fiber, polyethylene terephthalate fiber, etc. may be used. In addition, a coated separator containing a ceramic component or a polymer material may be used to secure heat resistance or mechanical strength, and the separator may be selectively used in a single-layer or multi-layer structure.

The electrolyte used in the present disclosure comprises, but is not limited to, an organic liquid electrolyte, an inorganic liquid electrolyte, a solid polymer electrolyte, a gel polymer electrolyte, a solid inorganic electrolyte, and a molten inorganic electrolyte, which can be used in the manufacture of a lithium secondary battery.

Specifically, the electrolyte may comprise an organic solvent and a lithium salt.

The organic solvent may be used without any particular limitation as long as it can serve as a medium through which ions involved in the electrochemical reaction of the battery can move. Specifically, the organic solvent may be an ester-based solvent such as methyl acetate, ethyl acetate, $\gamma$-butyrolactone, or $\varepsilon$-caprolactone; an ether-based solvents such as dibutyl ether or tetrahydrofuran; a ketone-based solvent such as cyclohexanone; an aromatic hydrocarbon-based solvent such as benzene, or fluorobenzene; a carbonate-based solvent such as dimethyl carbonate (DMC), diethyl carbonate (DEC), methylethyl carbonate (MEC), ethylmethyl carbonate (EMC), ethylene carbonate (EC), propylene carbonate (PC); an alcohol-based solvent such as ethyl alcohol or isopropyl alcohol; nitriles such as R-CN (R is a C2 to C20 linear, branched or cyclic hydrocarbon group, and may include a double bond aromatic ring or an ether bond); amides such as dimethylformamide; dioxolanes such as 1,3-dioxolane; or sulfolane. Among them, the carbonate-based solvent is preferable, and a mixture of the cyclic carbonate having high ionic conductivity and high dielectric constant that can increase the charge/discharge performance of the battery (e.g., ethylene carbonate or propylene carbonate, etc.) and the linear carbonate-based compound having a low viscosity (e.g., ethylmethyl carbonate, dimethyl carbonate or diethyl carbonate, etc.) is more preferred. In this case, when the cyclic carbonate and the chain carbonate are mixed in a volume ratio of about 1:1 to about 1:9, the performance of the electrolyte solution may be excellent.

The lithium salt may be used without particular limitation as long as it is a compound capable of providing lithium ions used in a lithium secondary battery. Specifically, the lithium salt may be $LiN(FSO_2)_2$, $LiSCN$, $LiN(CN)_2$, $LiN(CF_3SO_2)_2$, $LiN(CF_3CF_2SO_2)_2$, $LiPF_6$, $LiF$, $LiCl$, $LiBr$, $LiI$, $LiNO_3$, $LiClO_4$, $LiAlO_4$, $LiAlCl_4$, $LiSbF_6$, $LiAsF_6$, $LiBF_2C_2O_4$, $LiBC_4O_8$, $Li(CF_3)_2PF_4$, $Li(CF_3)_3PF_3$, $Li(CF_3)_4PF_2$, $Li(CF_3)_5PF$, $Li(CF_3)_6P$, $LiCF_3SO_3$, $LiC_4F_9SO_3$, $LiCF_3CF_2SO_3$, $LiCF_3CF_2(CF_3)_2CO$, $Li(CF_3SO_2)_2CH$, $LiCF_3(CF_2)_7SO_3$, $LiCF_3CO_2$, $LiCH_3CO_2$ and combinations thereof. The concentration of the lithium salt is preferably used within the range of 0.1 to 2.0M. If the concentration of the lithium salt is in the above range, since the electrolyte has appropriate conductivity and viscosity, excellent electrolyte performance can be exhibited, and lithium ions can move effectively.

In the electrolyte, in addition to the electrolyte components described above, for the purpose of improving the lifetime characteristics of the battery, suppressing the decrease in the capacity of the battery, and improving the discharging capacity of the battery, for example, one or more additives such as haloalkylene carbonate-based compounds such as difluoroethylene carbonate, pyridine, triethylphosphite, triethanolamine, cyclic ether, ethylene diamine, n-glyme, hexaphosphoric acid triamide, nitrobenzene derivative, sulfur, quinone imine dye, N-substituted oxazolidinone, N,N-substituted imidazolidine, ethylene glycol dialkyl ether, ammonium salt, pyrrole, 2-methoxy ethanol or aluminum trichloride may be further comprised. In this case, the additive may be contained in an amount of 0.1 to 5% by weight based on the total weight of the electrolyte.

As described above, since the lithium secondary battery comprising the positive electrode active material according to the present disclosure stably exhibits excellent discharging capacity, output characteristics and capacity retention rate, it is useful in the field of portable devices such as cellular phones, notebook computers, and digital cameras, and electric vehicles such as a hybrid electric vehicle (HEV).

Accordingly, according to another embodiment of the present invention, the present invention provides a battery module comprising the lithium secondary battery as a unit cell and a battery pack comprising the same.

The battery module or battery pack may be used as a power source for any one or more medium- and large-sized devices of a power tool; an electric vehicle comprising an electric vehicle (EV), a hybrid electric vehicle, and a plug-in hybrid electric vehicle (PHEV); or a power storage system, etc.

Hereinafter, preferred examples of the present invention will be described in order to facilitate understanding of the present invention. It will be apparent to those skilled in the art, however, that the following examples are illustrative of the present invention and that various changes and modifications can be made within the scope and spirit of the present invention, and also it is natural that such variations and modifications are within the scope of the appended claims.

## Example

### Example 1

NiO, $Li_2O$, $Al(OH)_3$ and $(NH_4)_2HPO_4$ were mixed, and then, the prepared mixture was heat-treated at 300°C for 10 hours to prepare an additive. Upon mixing, the contents of NiO and $Li_2O$ were adjusted so that the mole of $Li_2O$/mole of NiO was 2.03. In addition, the content of $Al(OH)_3$ was adjusted to be 0.03 mol% based on the mole of NiO, and the content of $(NH_4)_2HPO_4$ was adjusted so that P was 5.5 wt.% based on the total weight of NiO and $Li_2O$.

### Comparative Example 1 (Al 0.03mol%)

An additive was prepared in the same manner as in Example 1, except that unlike Example 1, $(NH_4)_2HPO_4$ was not used.

### Comparative Example 2 (P 5.5wt.%)

An additive was prepared in the same manner as in Example 1, except that unlike Example 1, $Al(OH)_3$ was not used.

### Comparative Example 3 (Al 0.01mol% P 5.5wt.%)

The content of $Al(OH)_3$ was adjusted to be 0.01 mol% based on the mole of NiO, and the content of $(NH_4)_2HPO_4$ was adjusted so that P was 5.5 wt.% based on the total weight of NiO and $Li_2O$.

### Comparative Example 4 (Al 0.02mol% P 5.5wt%)

The content of $Al(OH)_3$ was adjusted to be 0.02 mol% based on the mole of NiO, and the content of $(NH_4)_2HPO_4$ was adjusted so that P was 5.5 wt.% based on the total weight of NiO and $Li_2O$.

## Experimental Example

### Experimental Example 1: Analysis of component of additive

Components of the additives of Example 1 and Comparative Examples 1 to 4 were analyzed by X-ray diffraction analysis using an X-ray diffractometer (Manufacturer: BRUKER NANO, Product name: Bruker D8 Advance), and the results are shown in Table 1 below.

Table 1:

| | Content(wt.%) | | | | | |
|---|---|---|---|---|---|---|
| | $Li_2NiO_2$ | NiO | $Li_3PO_4$ | $Li_5AlO_4$ | $Li_2O$ | Ni |
| Example 1 | 88.3 | 7.0 | 3.0 | 1.4 | - | 0.3 |
| Comparative Example 1 | 90.4 | 7.2 | - | 2.4 | - | - |
| Comparative Example 2 | 88.7 | 6.7 | 3.8 | - | - | 0.8 |
| Comparative Example 3 | 87.8 | 8.8 | 3.1 | - | < 1.0 | 0.3 |
| Comparative Example 4 | 88.9 | 7.7 | 3.1 | < 1.0 | < 1.0 | 0.3 |

**Manufacture of lithium secondary battery**

Lithium secondary batteries were manufactured to check the performance of the additives prepared according to Example 1 and Comparative Examples 1 to 4. Specifically, each additive in Example 1 and Comparative Examples 1 to 4 was mixed with $LiNi_{0.83}Co_{0.11}Mn_{0.06}O_2$, which is a positive electrode active material, in a weight ratio of 9:1 (positive electrode active material: additive), and then, mixed with carbon black, an electrically conductive material, and a PVDF binder in a solvent of N-methylpyrrolidone in a weight ratio of 85:10:5 (additive + positive electrode active material: electrically conductive material: binder) to obtain a slurry for a positive electrode active material. The prepared slurry was applied to one surface of an aluminum current collector (20 $\mu$m) (Loading amount: 0.2-0.3 mg/25cm$^2$), dried at 130°C for 20 minutes or more, and then rolled 1 or 2 times to have a porosity of 26%, and thus to prepare a positive electrode.

As a negative electrode, an electrode in which natural graphite and artificial graphite were mixed in a ratio of 5:5 was used, and a separator of porous polyethylene was interposed between the positive electrode and the negative electrode to prepare an electrode assembly. The electrode assembly was placed inside the battery case, and then, electrolyte was injected into the case to prepare a lithium secondary battery. At this time, the electrolyte solution was prepared by dissolving 0.7M concentration of lithium hexafluorophosphate ($LiPF_6$) and 0.3M concentration of lithium bis (fluorosulfonyl)imide (LiFSI) in an organic solvent consisting of ethylene carbonate/ethyl methyl carbonate (mixing volume ratio of EC/EMC=3/7) .

The manufactured lithium secondary battery was used to evaluate the performance of Experimental Examples 2 and 3.

**Experimental Example 2: Measurement of amount of gas generated**

The prepared lithium secondary battery was charged in CCCV mode (constant current, constant voltage) until it reached 0.1C, 4.2V, and stored in an oven at 60°C for a total of 4 weeks, and the volume change was measured by the Archimedes method.

The electrolyte solution was used in 250 ml by adding 0.7M of $LiPF_6$, 0.5M of LIFSI, 1.5 wt.% of VC, 0.5 wt.% of PS, and 1 wt.% of Esa to a mixed solvent of EC and EMC (mixing volume ratio of EC and EMC = 3:7, EC: ethyl carbonate, EMC: ethyl methyl carbonate) (PS: 1,3-propanesultone, VC: vinylene carbonate, Esa: ethylene sulfate). The pouch-filled cell was stored at a temperature of 60°C for 4 weeks, and then, the amount of gas generated by the battery was measured using the Archimedes method, and the results are shown in Table 2.

Table 2 below shows the amount of gas generated when the battery is 100% charged (SOC(State Of Charge) 100) (Formation gas), the amount of gas generated at 50 cycles at high temperature (45°C) (Cycle gas, 50th), and the amount of gas generated (Storage gas, 4w) and the precipitation amount of Ni during storage at high temperature (60°C) for 4 weeks.

The precipitation amount of Ni was measured using an inductively coupled plasma spectrometer (CP, PerkinElmer company, 7100 model) . It was calculated as a relative value with respect to the amount of Ni precipitated in Comparative Example 2.

Table 2:

| Gas (ml/g) | Comparative Example 1 | Comparative Example 2 | Comparative Example 3 | Comparative Example 4 | Example 1 |
|---|---|---|---|---|---|
| Formation | 5.36 | 4.51 | 4.199 | 4.299 | 4.07 |

(continued)

| Gas (ml/g) | Comparative Example 1 | Comparative Example 2 | Comparative Example 3 | Comparative Example 4 | Example 1 |
|---|---|---|---|---|---|
| Cycle (50th) | 6.76 | 4.67 | 4.61 | 4.36 | 4.31 |
| Storage (4w) | 4.65 | 2.02 | 2.99 | 2.22 | 2.04 |
| Precipitation amount of Ni (ppm) | <10 | 3000 (100%) | 1743 (58.1%) | 1155 (38.5%) | 1760 (58.7%) |

As a result, as shown in Table 2 above, it can be seen that Comparative Example 1, in which the positive electrode active material does not contain element P, generates a significantly higher amount of gas in all the charged state, the charging and discharging state, and the storage state. In addition, it can be seen that Comparative Example 2 in which Al is not included in the positive electrode active material has a significantly higher Ni precipitation amount.

Therefore, it was confirmed that a positive electrode active material containing Al and P elements at the same time can reduce both the amount of gas generated and the amount of Ni precipitation,

This is because Comparative Example 1 containing only Al among P and Al and Example 1 containing P and Al together contain Al in common, but, when P and Al are contained together, Al is better doped to the Ni site.

In the above, although the present invention has been described by way of limited embodiments and drawings, the present invention is not limited thereto, and it is apparent to those skilled in the art that various modifications and variations can be made within the equivalent scope of the technical spirit of the present invention and the claims to be described below.

**Claims**

1. An additive for a positive electrode for a lithium secondary battery, the additive comprising a lithium transition metal oxide, $Li_3PO_4$, and $Li_5AlO_4$,
   wherein the lithium transition metal oxide is doped with aluminum.

2. The additive for the positive electrode for the lithium secondary battery according to claim 1, wherein the lithium transition metal oxide is represented by Formula 1 below:

$$[Formula\ 1]$$

$$Li_2Ni_{1-x}Al_xO_2$$

   wherein x is 0.001 to 0.005.

3. The additive for the positive electrode for the lithium secondary battery according to claim 1, wherein the lithium transition metal oxide is contained in an amount of 75 to 90% by weight based on a total weight of the additive.

4. The additive for the positive electrode for the lithium secondary battery according to claim 1, wherein $Li_3PO_4$ is contained in an amount of 1 to 10% by weight based on a total weight of the additive.

5. The additive for the positive electrode for the lithium secondary battery according to claim 1, wherein $Li_5AlO_4$ is contained in an amount of 0.5 to 5% by weight based on a total weight of the additive.

6. The additive for the positive electrode for the lithium secondary battery according to claim 1, wherein a portion of the $Li_3PO_4$ is present in a coated state on the lithium transition metal oxide.

7. The additive for the positive electrode for the lithium secondary battery according to claim 2, wherein the additive further comprises NiO.

8. The additive for the positive electrode for the lithium secondary battery according to claim 7, wherein the NiO is contained in an amount of 5 to 15% by weight based on a total weight of the additive.

9.  A method for preparing the additive for the positive electrode for the lithium secondary battery according to claim 1, comprising:

    (1) mixing a transition metal source material, a lithium source material, a phosphorus source material, and an aluminum source material to prepare a mixture; and
    (2) heat-treating the mixture to prepare the additive.

10. The method for preparing the additive for the positive electrode for the lithium secondary battery according to claim 9, wherein during the mixing (1), the transition metal source material is NiO, the lithium source material is $Li_2O$, LiOH or $Li_2CO_3$, the phosphorus source material is $(NH_4)_2HPO_4$, and the aluminum source material is $Al(OH)_3$.

11. The method for preparing the additive for the positive electrode for the lithium secondary battery according to claim 9, wherein the heat-treating is performed at 300 to 700°C for 10 to 32 hours.

12. A positive electrode for a lithium secondary battery comprising the additive according to claim 1 and a positive electrode active material,
    wherein the additive is contained in an amount of 10 to 40 parts by weight based on 100 parts by weight of the positive electrode active material.

## INTERNATIONAL SEARCH REPORT

| International application No. |
| --- |
| **PCT/KR2022/006606** |

| **A.** | **CLASSIFICATION OF SUBJECT MATTER** |
| --- | --- |

H01M 4/36(2006.01)i; H01M 4/62(2006.01)i; H01M 10/42(2006.01)i; H01M 4/525(2010.01)i; C01G 53/00(2006.01)i; H01M 10/052(2010.01)i

According to International Patent Classification (IPC) or to both national classification and IPC

| **B.** | **FIELDS SEARCHED** |
| --- | --- |

Minimum documentation searched (classification system followed by classification symbols)

H01M 4/36(2006.01); C01F 7/04(2006.01); H01M 10/052(2010.01); H01M 10/42(2006.01); H01M 4/485(2010.01); H01M 4/525(2010.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬니켈산화물(lithium nickel oxide), NiO, Li2O, Li3PO4, Li5AlO4, 알루미늄 (aluminum), 도핑(doping), 비가역 첨가제(irreversible additive), 양극(positive electrode)

| **C.** | **DOCUMENTS CONSIDERED TO BE RELEVANT** | |
| --- | --- | --- |

| Category* | Citation of document, with indication, where appropriate, of the relevant passages | Relevant to claim No. |
| --- | --- | --- |
| Y | KR 10-2019-0064397 A (LG CHEM, LTD.) 10 June 2019 (2019-06-10) See claims 1, 3, 6, 10 and 11; and paragraphs [0040], [0148], [0149], [0159] and [0161]. | 1-12 |
| Y | KR 10-2019-0059242 A (LG CHEM, LTD.) 30 May 2019 (2019-05-30) See claim 1; and paragraphs [0010], [0011], [0042], [0063] and [0150]. | 1-12 |
| A | KR 10-2019-0059115 A (LG CHEM, LTD.) 30 May 2019 (2019-05-30) See claims 1-17. | 1-12 |
| A | KR 10-2017-0071945 A (SAMSUNG ELECTRONICS CO., LTD. et al.) 26 June 2017 (2017-06-26) See entire document. | 1-12 |
| A | KR 10-1397022 B1 (SAMSUNG SDI CO., LTD.) 21 May 2014 (2014-05-21) See entire document. | 1-12 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **10 August 2022** | **10 August 2022** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
**Information on patent family members**

International application No.

**PCT/KR2022/006606**

| Patent document cited in search report | | | Publication date (day/month/year) | Patent family member(s) | | | Publication date (day/month/year) |
|---|---|---|---|---|---|---|---|
| KR | 10-2019-0064397 | A | 10 June 2019 | CN | 110447132 | A | 12 November 2019 |
| | | | | CN | 110447132 | B | 07 June 2022 |
| | | | | EP | 3595063 | A1 | 15 January 2020 |
| | | | | EP | 3595063 | A4 | 08 July 2020 |
| | | | | EP | 3595063 | B1 | 06 July 2022 |
| | | | | JP | 2020-513145 | A | 30 April 2020 |
| | | | | JP | 7045553 | B2 | 01 April 2022 |
| | | | | US | 11329287 | B2 | 10 May 2022 |
| | | | | US | 2020-0335790 | A1 | 22 October 2020 |
| | | | | WO | 2019-107808 | A1 | 06 June 2019 |
| KR | 10-2019-0059242 | A | 30 May 2019 | CN | 110573459 | A | 13 December 2019 |
| | | | | CN | 110573459 | B | 17 June 2022 |
| | | | | EP | 3608293 | A2 | 12 February 2020 |
| | | | | EP | 3608293 | A4 | 06 May 2020 |
| | | | | JP | 2020-518967 | A | 25 June 2020 |
| | | | | JP | 7045557 | B2 | 01 April 2022 |
| | | | | US | 11398623 | B2 | 26 July 2022 |
| | | | | US | 2020-0176754 | A1 | 04 June 2020 |
| | | | | WO | 2019-103459 | A2 | 31 May 2019 |
| | | | | WO | 2019-103459 | A3 | 18 July 2019 |
| KR | 10-2019-0059115 | A | 30 May 2019 | KR | 10-2345015 | B1 | 28 December 2021 |
| KR | 10-2017-0071945 | A | 26 June 2017 | US | 10243210 | B2 | 26 March 2019 |
| | | | | US | 2017-0179484 | A1 | 22 June 2017 |
| KR | 10-1397022 | B1 | 21 May 2014 | CN | 102315441 | A | 11 January 2012 |
| | | | | CN | 102315441 | B | 02 March 2016 |
| | | | | EP | 2403042 | A1 | 04 January 2012 |
| | | | | JP | 2012-015110 | A | 19 January 2012 |
| | | | | JP | 5303612 | B2 | 02 October 2013 |
| | | | | KR | 10-2012-0003380 | A | 10 January 2012 |
| | | | | US | 2012-0003541 | A1 | 05 January 2012 |

Form PCT/ISA/210 (patent family annex) (July 2019)

**REFERENCES CITED IN THE DESCRIPTION**

**Patent documents cited in the description**

- KR 20210060079
- KR 20220056352

- KR 102016002187